# EUROPÄISCHE PATENTSCHRIFT

(11) **EP 2 128 697 B1**
(45) Veröffentlichungstag und Bekanntmachung des Hinweises auf die Patenterteilung: **17.02.2016**
(21) Anmeldenummer: 08157101.0
(22) Anmeldetag: 28.05.2008
(51) Int. Cl.: G03B 42/04

(54) **Vorrichtung zum Auslesen von in Speicherleuchtstoffplatten gespeicherten Röntgeninformationen**
Device for reading out x-ray information stored in storage phosphor plates
Dispositif destiné à la lecture d'informations radiographiques stockées dans des plaques fluorescentes de mémoire

(43) Veröffentlichungstag der Anmeldung: 02.12.2009
(73) Patentinhaber: Agfa HealthCare N.V., 2640 Mortsel (BE)
(72) Erfinder: Hölzl, Johannes, D-85630 Grasbrunn (DE); Schindlbeck, Günther, D-81545 München (DE); Voigtländer, Volkmar, D-82223 Eichenau (DE); Hartmann, Thomas, D-82449 Uffing am Staffelsee (DE); Auer, Franz, D-84056 Rottenburg (DE); Werkstetter, Rudolf, D-84567 Perach (DE)
(74) Vertreter: Linsmeier, Josef

(56) Entgegenhaltungen:
- EP-A- 0 698 813
- JP-A- 4 042 222
- US-A1- 2006 131 525
- US-A1- 2006 131 526
- US-A1- 2006 131 527

## Beschreibung

Die vorliegende Erfindung betrifft eine Vorrichtung zum Auslesen von in Speicherleuchtstoffplatten gespeicherten Röntgeninformationen mit einer Eingabeeinheit, in welcher mehrere Kassetten, in denen sich jeweils eine auszulesende Speicherleuchtstoffplatte befindet, hintereinander in einer Stapelrichtung stapelbar sind, einem länglichen Aufnahmeschacht zum Aufnehmen einer der Kassetten, wobei der Aufnahmeschacht an die Eingabeeinheit angrenzt und eine längliche Eingabeöffnung aufweist, durch welche hindurch die Speicherleuchtstoffplatte, die sich in der von dem Aufnahmeschacht aufgenommenen Kassette befindet, in das Innere der Vorrichtung transportierbar ist, und einer Verschiebeeinrichtung zum horizontalen Verschieben der von dem Aufnahmeschacht aufgenommenen Kassette entlang eines Verschiebeweges.

Im Bereich der Computer-Radiografie (CR) wird für medizinische Zwecke von einem Objekt, beispielsweise einem Patienten oder einem Körperteil des Patienten, mittels Röntgenbestrahlung ein Bild erzeugt, das in einer Speicherleuchtstoffschicht als latentes Röntgenbild gespeichert wird. Zum Auslesen der in der Speicherleuchtstoffschicht abgespeicherten Bildinformationen wird die Speicherleuchtstoffschicht mittels einer Bestrahlungseinrichtung angeregt. Die Speicherleuchtstoffschicht emittiert aufgrund dieser Anregung Emissionsstrahlung, die eine Intensität entsprechend der Menge der in der Speicherleuchtstoffschicht abgespeicherten Bildinformationen des Röntgenbildes aufweist. Die von der Speicherleuchtstoffschicht ausgesandte Emissionsstrahlung wird von einem Detektor erfasst und in elektrische Signale umgewandelt, die ein Abbild der Bildinformationen enthalten. Die elektrischen Signale werden weiterverarbeitet und die in der Speicherleuchtstoffschicht abgespeicherten Bildinformationen anschließend sichtbar gemacht. Die Bildinformationen können beispielsweise direkt auf einem Monitor dargestellt oder mittels eines speziell für Röntgenbilder verwendbaren Druckers auf einen fotografischen Röntgenfilm geschrieben werden.

Eine Vorrichtung zum Auslesen von in Speicherleuchtstoffplatten gespeicherten Röntgeninformationen ist aus der US 2006/0131525 A1 bekannt. Diese Vorrichtung enthält eine Eingabeeinheit zum Eingeben von mehreren, hintereinander stapelbaren Kassetten mit auszulesenden Speicherleuchtstoffplatten und einer neben der Eingabeeinheit vorgesehenen Ausgabeeinheit zum Ausgeben von Kassetten. Eine Ausleseeinheit befindet sich im Innern der Vorrichtung unterhalb der Ausgabeeinheit. Zum Auslesen der in den Kassetten befindlichen Speicherleuchtstoffplatten werden die in die Eingabeeinheit eingegebenen Kassetten in die Ausgabeeinheit geschoben. Dort wird der jeweiligen Kassette die in ihr befindliche Speicherleuchtstoffplatte entnommen und nach unten zum Auslesen in die Ausleseeinheit transportiert. Die ausgelesene Speicherleuchtstoffplatte wird anschließend wieder in die Kassette zurücktransportiert und zusammen mit dieser in der Ausgabeeinheit nach vorne verfahren, um für die nachfolgende, auszulesende Kassette Platz zu machen.

Bei dieser Vorrichtung kann die in einer nachfolgenden Kassette befindliche Speicherleuchtstoffplatte erst dann in der Ausleseeinheit ausgelesen werden, nachdem zunächst die vorhergehende und bereits ausgelesene Kassette vollständig aus dem in der Ausgabeeinheit befindlichen Eingangsbereich der Ausleseeinheit entfernt und dann die nachfolgende Kassette von der Eingabeeinheit zur Ausgabeeinheit befördert worden ist. Dies kann zu unerwünschten Verzögerungen beim Verarbeiten einzelner Kassetten oder auch größerer Kassettenstapel führen.

Aus der US 2006/0131526 A1 ist eine weitere Vorrichtung zum Auslesen von in Speicherleuchtstoffplatten gespeicherten Röntgeninformationen bekannt. Bei dieser Vorrichtung ist die Ausleseeinheit zwischen der Eingabeeinheit und der Ausgabeeinheit angeordnet. Die Kassetten werden von der Eingabeeinheit horizontal in Richtung Ausleseeinheit verschoben. Dort wird die in der jeweiligen Kassette befindliche Speicherleuchtstoffplatte nach unten in das Innere der Vorrichtung befördert, ausgelesen und wieder in die Kassette zurückbefördert, welche schließlich von der Ausleseeinheit horizontal in Richtung Ausgabeeinheit verschoben wird.

Auch bei dieser Vorrichtung kann es wegen des dreistufigen und dadurch relativ langen Verschiebeweges von der Eingabeeinheit zur Ausleseeinheit und von dieser zur Ausgabeeinheit zu unterwünschten Verzögerungen beim Verarbeiten sowohl einzelner Kassetten als auch größerer Kassettenstapel kommen.

Darüber hinaus kann bei den oben beschriebenen Vorrichtungen nicht immer ein störungsfreies Verschieben der Kassetten gewährleistet werden.

Aus US 2006/0131527 A1 ist eine Vorrichtung bekannt, bei welcher Kassetten in einen Eingabebehälter eingegeben, von dort einzeln zunächst in einen Vorauslesebereich, anschließend in einen Lesebereich, dann in einen Nachauslesebereich und schließlich in einen Ausgabebehälter transportiert werden. Der Lesebereich, in welchem eine Speicherleuchtstoffplatte aus der im Lesebereich befindlichen Kassette entnommen und in das Innere der Vorrichtung transportiert werden kann, liegt in einem hinter dem Eingabe- und Ausgabebehälter befindlichen Zwischenraum. Eine im Eingabebehälter eingegebene Kassette wird mittels eines Abstreifers in Richtung des Vorauslesebereichs bewegt, wobei die restlichen Kassetten des eingegebenen Stapels mittels eines in entgegengesetzter Richtung bewegten Separators in Richtung der ansteigenden Bodenfläche des Eingabebehälters bewegt werden.

Es ist die Aufgabe der vorliegenden Erfindung, in einer Vorrichtung zum Auslesen von in Speicherleuchtstoffplatten gespeicherten Röntgeninformationen eine zuverlässige Handhabung von in einer Eingabeeinheit der Vorrichtung gestapelten Kassetten, in denen sich die Speicherleuchtstoffplatten befinden, zu gewährleisten.

Diese Aufgabe wird gemäß der technischen Lehre des Anspruchs 1 gelöst. Die erfindungsgemäße Vorrichtung zum Auslesen von in Speicherleuchtstoffplatten gespeicherten Röntgeninformationen enthält ein Ablenkelement zum Ablenken wenigstens einer in der Eingabeeinheit befindlichen nächsten Kassette, die der vom Aufnahmeschacht aufgenommenen Kassette benachbart ist und zumindest teilweise in den Verschiebeweg ragt. Das Ablenkelement ist so angeordnet und/oder ausgestaltet, dass beim horizontalen Verschieben der im Aufnahmeschacht befindlichen Kassette aufgrund eines Kontakts zwischen der im Aufnahmeschacht befindlichen Kassette und der in der Eingabeeinheit befindlichen nächsten Kassette auf die nächste Kassette eine Kraft oder Kraftkomponente in Stapelrichtung ausgeübt wird, so dass diese dabei aus dem Verschiebeweg heraus bewegt wird und damit den Verschiebeweg für einen störungsfreien Transport der im Aufnahmeschacht beförderten Kassette freigibt.

Durch die Erfindung wird ein Zuführen von in der Eingabeeinheit gestapelten Kassetten zum Aufnahmeschacht sowie das Verschieben der im Aufnahmeschacht befindlichen Kassette auf zuverlässige und einfache Weise gewährleistet.

Bei dem erfindungsgemäßen Prinzip wird die von dem Aufnahmeschacht aufgenommene Kassette mittels der Verschiebeeinrichtung horizontal in Richtung der Eingabeöffnung verschoben, durch welche hindurch die in der Kassette befindliche Speicherleuchtstoffplatte aus der dazu geöffneten Kassette in das Innere der Vorrichtung transportiert werden kann. Durch das Stapeln der mehreren Kassetten in der Eingabeeinheit kann der Verschiebeweg der im Aufnahmeschacht befindlichen Kassette ggf. durch eine in Stapelrichtung benachbarte Kassette, d. h. die nächste im Stapel befindliche "nachrückende" Kassette, zumindest teilweise versperrt werden. Dies kann insbesondere dann passieren, wenn die nächste Kassette durch die Gewichtskraft der anderen im Stapel befindlichen Kassetten stark in Richtung des Aufnahmeschachts gedrückt wird. Beim Verschieben der im Aufnahmeschacht befindlichen Kassette berührt diese somit zwangsläufig die nächste Kassette und übt auf sie eine Kraft aus. Sofern die nächste Kassette nicht bereits das Ablenkelement berührt, wird sie aufgrund von zwischen den Kassetten auftretenden Reibungskräften zusammen mit der im Aufnahmeschacht befindlichen Kassette bis zum Ablenkelement verschoben. Wenn die nächste Kassette dann in Kontakt mit dem Ablenkelement tritt, wird durch die im Aufnahmeschacht befindliche Kassette weiter in horizontaler Richtung auf die nächste Kassette eine Kraft ausgeübt. Für den Fall, dass die nächste Kassette nicht parallel zu der im Aufnahmeschacht befindlichen Kassette ausgerichtet ist und in deren Verschiebeweg ragt, wird die nächste Kassette durch die in horizontaler Richtung ausgeübte Kraft gegen das Ablenkelement gedrückt und aufgrund dessen Anordnung und/oder Form aus dem Verschiebeweg herausbewegt.

Auf diese Weise wird durch das Ablenkelement vermieden, dass sich die nächste Kassette verkeilen oder verklemmen und dadurch den Transport der im Aufnahmeschacht befindlichen Kassette behindern kann.

In einer vorteilhaften Ausgestaltung der Erfindung ist das Ablenkelement in einem Bereich eines Übergangs der Eingabeeinheit zu dem Aufnahmeschacht angeordnet. Dadurch wird ein Blockieren des Verschiebeweges auf effektive Weise verhindert.

In einer weiteren vorteilhaften Ausgestaltung weist das Ablenkelement einen abgeschrägten Führungsbereich zum Führen der in der Eingabeeinheit befindlichen nächsten Kassette in Stapelrichtung auf. Durch diesen abgeschrägten Führungsbereich wird auf einfache Weise erreicht, dass die nächste Kassette ohne Verklemmen aus dem Verschiebeweg heraus bewegt wird. Vorteilhafterweise weist die Schräge des Führungsbereichs zum Aufnahmeschacht hin.

In einer besonders bevorzugten Ausgestaltung der Erfindung ist das Ablenkelement in einem Randbereich des Aufnahmeschachts angeordnet. Hierdurch wird die übrige Handhabung der Kassetten, insbesondere der weiteren, in der Eingabeeinheit befindlichen Kassetten durch das Ablenkelement nicht behindert. Vorteilhafterweise kann das Ablenkelement so ausgestaltet sein, dass es einen Anschlag darstellt, mit dem die in dem Aufnahmeschacht befindliche Kassette im Bereich der Eingabeöffnung positioniert werden kann.

Es ist außerdem bevorzugt, ein Positionierungselement zum Positionieren der von dem Aufnahmeschacht aufgenommenen Kassette in vertikaler Richtung von dem Aufnahmeschacht beabstandet anzuordnen. Die Verschiebeeinrichtung ist hierbei so ausgestaltet, dass sie die von dem Aufnahmeschacht aufgenommene Kassette zum Auslesen der in ihr befindlichen Speicherleuchtstoffplatte in Richtung des Positionierungselements verschiebt. Das Positionierungselement ist so ausgestaltet und/oder angeordnet, dass ein Verkippen der nächsten Kassette über das Positionierungselement hinaus vermieden wird. Durch das Positionierungselement kann die Kassette sicher und präzise in einer Sollposition im Aufnahmeschacht positioniert werden. Gleichzeitig wird ein Verkippen der nächsten Kassette, insbesondere beim Herausbewegen der nächsten Kassette mittels des Ablenkungselements, über das Positionierungselement hinaus verhindert und damit ein zuverlässiges Herausbewegen der nächsten Kassette aus dem Verschiebeweg gewährleistet.

Vorzugsweise sind das Positionierungselement und das Ablenkelement in vertikaler Richtung voneinander beabstandet und im Wesentlichen übereinander angeordnet. Dies gewährleistet ein besonders sicheres Positionieren der Kassette.

Vorzugsweise ist das Ablenkelement in Stapelrichtung verschwenk- und/oder verfahrbar angeordnet, so dass es in den oder aus dem Verschiebeweg geschwenkt bzw. gefahren werden kann. Dadurch wird das Herausbewegen der nächsten Kassette aus dem Verschiebeweg der im Aufnahmeschacht befindlichen Kassette unterstützt. Ferner kann dadurch sichergestellt werden, dass das Verschieben der in dem Aufnahmeschacht befindlichen Kassette nicht durch das Ablenkelement behindert wird.

In einer vorteilhaften Ausführung der Erfindung ist das Ablenkelement in eine Sperrposition und in eine Passierposition verschwenk- bzw. verfahrbar. Dabei ist es so ausgestaltet und/oder angeordnet, dass es in seiner Sperrposition den durch den Aufnahmeschacht vorgegebenen Verschiebeweg für das Verschieben der im Aufnahmeschacht befindlichen Kassette versperrt und in seiner Passierposition diesen Verschiebeweg freigibt. Dadurch kann vorteilhafterweise gewährleistet werden, dass ausschließlich eine "berechtigte" Kassette das Ablenkelement passieren kann.

Vorzugsweise ist bei dieser Ausführung das Ablenkelement so ausgestaltet und/oder angeordnet, dass die in dem Aufnahmeschacht befindliche Kassette bei ihrem Verschieben aufgrund eines Kontakts zwischen der im Aufnahmeschacht befindlichen Kassette und dem Ablenkelement dieses aus seiner Sperrposition in seine Passierposition bringt. Durch diese vorteilhafte Ausgestaltung kann auf einfache Weise gewährleistet werden, dass die in dem Aufnahmeschacht befindliche Kassette selbst ihren von dem Ablenkelement versperrten Verschiebeweg freimacht.

In einer alternativen Ausgestaltung dieser Ausführung der Erfindung ist eine Steuerung zum Steuern des Verschwenkens bzw. Verfahrens des Ablenkelements in seine Sperrposition und Passierposition vorhanden. Mittels dieser sog. Zwangssteuerung wird das Verschwenken bzw. Verfahren des zweiten Ablenkelements bewirkt.

Die Steuerung ist vorzugsweise so ausgestaltet, dass sie das Verschwenken oder Verfahren des Ablenkelements von seiner Sperrposition in seine Passierposition abhängig von einem Erreichen einer vorgegebenen Position der in dem Aufnahmeschacht befindlichen Kassette bei ihrem Verschieben steuert. Die vorgegebene Position kann insbesondere so gewählt werden, dass das Ablenkelement unmittelbar vor dem Eintreffen der in dem Aufnahmeschacht befindlichen Kassette an dem zweiten Ablenkelement in die Passierposition gebracht wird.

In einer Ausgestaltung der Erfindung sind wenigstens zwei Ablenkelemente zum Ablenken der in der Eingabeeinheit befindlichen nächsten Kassette vorgesehen. Dabei ist ein erstes der Ablenkelemente so angeordnet und/oder ausgestaltet, dass beim Verschieben der im Aufnahmeschacht befindlichen Kassette, in welcher sich eine noch auszulesende Speicherleuchtstoffplatte befindet, in eine erste horizontale Richtung aufgrund eines Kontakts zwischen der im Aufnahmeschacht befindlichen Kassette und der in der Eingabeeinheit befindlichen nächsten Kassette auf diese eine Kraft in Stapelrichtung ausgeübt und diese dabei aus dem Verschiebeweg heraus bewegt wird. Ein zweites der Ablenkelemente ist so angeordnet und/oder ausgestaltet, dass beim Verschieben der im Aufnahmeschacht befindlichen Kassette, in welcher sich eine bereits ausgelesene Speicherleuchtstoffplatte befindet, in eine zweite horizontale Richtung, die der ersten horizontalen Richtung entgegengerichtet ist, aufgrund eines Kontakts zwischen der im Aufnahmeschacht befindlichen Kassette und der in der Eingabeeinheit befindlichen nächsten Kassette auf diese eine Kraft in Stapelrichtung ausgeübt und diese dabei aus dem Verschiebeweg heraus bewegt wird. Durch diese Anordnung der beiden Ablenkelemente kann vorteilhafterweise gewährleistet werden, dass die in dem Aufnahmeschacht befindliche Kassette sowohl beim Verschieben hin zur Eingabeöffnung, um die in ihr befindliche Speicherleuchtstoffplatte auszulesen, als auch beim Verschieben von der Eingabeöffnung weg, nachdem die in ihr befindliche Speicherleuchtstoffplatte ausgelesen wurde, nicht durch die in der Eingabeeinheit befindliche nächste Kassette behindert wird. Das zweite Ablenkelement sorgt dafür, dass die ggf. in den Verschiebeweg der in dem Aufnahmeschacht befindlichen Kassette zumindest teilweise hinein ragende nächste Kassette beim Verschieben der in dem Aufnahmeschacht befindlichen Kassette weg von der Eingabeöffnung aus dem Verschiebeweg heraus bewegt wird.

Das erste der Ablenkelemente ist hierbei vorzugsweise ortsfest angeordnet. Das zweite der Ablenkelemente ist vorzugsweise in Stapelrichtung verschwenk- und/oder verfahrbar angeordnet, wie oben stehend näher beschrieben.

In einer weiteren Ausgestaltung der Erfindung weist die Verschiebeeinrichtung ein horizontal verfahrbares Transportband auf, an dem zwei Mitnehmer zum Mitnehmen, d. h. Verschieben, der von dem Aufnahmeschacht aufgenommenen Kassette angebracht sind, die entlang der Länge des Transportbandes voneinander beabstandet sind. Der Abstand ist dabei größer als die größte Breite der horizontalen Breiten der mehreren Kassetten. Durch die Mitnehmer, die als Nocken realisiert sein können, kann auf besonders einfache, kostengünstige und zuverlässige Weise das Verschieben der in dem Aufnahmeschacht befindlichen Kassette bewirkt werden. Durch die beiden voneinander beabstandeten Mitnehmer kann die Kassette schnell und sicher in zwei einander entgegengesetzte Richtungen verschoben werden. Dabei befindet sich die Kassette zwischen den beiden Mitnehmern, so dass beim Verschieben in die eine Richtung der eine der Mitnehmer und beim Verschieben in die andere, entgegengesetzte Richtung der andere der Mitnehmer mit der Kassette in Kontakt kommt. Die beiden Mitnehmer sind an dem, vorzugsweise als Endlosband ausgebildeten, Transportband insbesondere um 180° phasenverschoben angeordnet.

In einer vorteilhaften Weiterbildung dieser Ausgestaltung weisen die zwei Mitnehmer jeweils zwei einzelne Teilmitnehmer auf, die entlang der Länge des Transportbandes unmittelbar angrenzend aneinander an dem Transportband angebracht sind. Die zwei Mitnehmer sind somit jeweils als Doppelmitnehmer ausgestaltet. Die einzelnen Teilmitnehmer können insbesondere als Nocken oder Klötze realisiert sein. Beim Verschieben der in dem Aufnahmeschacht befindlichen Kassette wird somit der an der Kassette anliegende Teilmitnehmer von dem unmittelbar angrenzenden weiteren Teilmitnehmer gestützt. Dies gewährleistet ein besonders sicheres Transportieren der Kassette. Ferner kann durch diese Ausgestaltung ein geringes Verformen des Transportbandes beim horizontalen Verfahren der Kassetten sichergestellt werden.

Vorteilhafterweise wird das als Endlosband ausgebildete Transportband über Umlenkrollen umgelenkt. Dies gewährleistet eine kompakte Anordnung der Verschiebeeinrichtung. Durch die Realisierung der Mitnehmer mittels der einzelnen Teilmitnehmer kann bei einem Umlaufen der geteilten Mitnehmer um die Umlenkrollen in dem Transportband eine besonders geringe Spannung gewährleistet werden. Dies gewährleistet eine lange Haltbarkeit sowie einen weitgehend ruckfreien Gleichlauf des Transportbands.

In einer vorteilhaften Ausgestaltung der Erfindung sind eine Erfassungseinrichtung zum Erfassen einer in Stapelrichtung hintersten, nicht ordnungsgemäß von dem Aufnahmeschacht aufgenommenen Kassette und eine Steuerung zum Steuern des horizontalen Verfahrens des Transportbandes vorhanden. Die Steuerung ist so ausgestaltet, dass sie ein aufeinanderfolgendes Verfahren des Transportbandes und ein dadurch bewirktes, aufeinanderfolgendes, horizontales Verschieben der in der Stapelrichtung hintersten Kassette in zwei entgegengesetzte Transportrichtungen steuert, sofern die Erfassungseinrichtung die nicht ordnungsgemäße Aufnahme der in der Stapelrichtung vordersten Kassette von dem Aufnahmeschacht erfasst. Durch ein solches Hin- und Herverschieben der in der Stapelrichtung hintersten Kassette in die beiden entgegengesetzten Transportrichtungen wird erreicht, dass die Kassette von dem Aufnahmeschacht ordnungsgemäß aufgenommen wird. Das gilt vor allem für relativ kleine Kassetten, die durch einen in der Eingabeeinheit vorhandenen Kassettenstapel, insbesondere schräg, in Richtung des Aufnahmeschachts gedrückt werden, so dass aufgrund von Haftreibungskräften zunächst ein Hineinrutschen der Kassette in den Aufnahmeschacht unterbleibt. Die Erfassungseinrichtung kann vorteilhafterweise eine Lichtschranke sein.

Vorzugsweise weist die erfindungsgemäße Vorrichtung eine Ausgabeeinheit zum Ausgeben der mehreren Kassetten auf, die in der Ausgabeeinheit hintereinander, vorzugsweise in einer entgegengesetzten Stapelrichtung, stapelbar sind. In der Ausgabeeinheit sind zwei horizontal voneinander beabstandete Abdrücker vorhanden, die in die Stapelrichtung verfahrbar sind. Die Abdrücker bewirken ein sicheres und stabiles Nachvorneverschieben der in der Ausgabeeinheit befindlichen Kassetten, insbesondere der in entgegengesetzter Stapelrichtung hintersten Kassette. Das Betätigen der Abdrücker gewährleistet auf besonders einfache Weise, dass eine neue, in die Ausgabeeinheit verschobene Kassette an hinterster Position an den in der Ausgabeeinheit befindlichen Kassettenstapel angefügt werden kann.

Bei dieser bevorzugten Ausgestaltung der Erfindung ist eine Steuerung zum Steuern der Abdrücker vorhanden. Diese ist so ausgestaltet, dass sie ein sequentielles Verfahren der beiden Abdrücker steuert. Bei diesem sequentiellen Verfahren verfährt sie bei einem Verschieben der in dem Aufnahmeschacht befindlichen Kassette in die Ausgabeeinheit zunächst den zur Eingabeeinheit näher platzierten, in die Stapelrichtung verfahrenen Abdrücker in die entgegengesetzte Stapelrichtung. Anschießend verfährt sie den von der Eingabeeinheit weiter entfernten, in die Stapelrichtung verfahrenen Abdrücker in die entgegengesetzte Stapelrichtung. Durch das sequentielle Verfahren der beiden Abdrücker in Stapelrichtung werden die Abdrücker nacheinander aus dem Verschiebeweg der in dem Aufnahmeschacht befindlichen Kassette gefahren. Die beiden Abdrücker weichen somit der in die Ausgabeeinheit nachschiebenden Kassette. Dabei kann die Verschiebeeinrichtung so ausgestaltet sein, dass sie die von dem Aufnahmeschacht aufgenommene Kassette mit der ausgelesenen Speicherleuchtstoffplatte in die Ausgabeeinheit verschiebt.

Weitere Vorteile der Erfindung ergeben sich aus der folgenden Beschreibung von Ausführungsbeispielen, wobei Bezug auf die beigefügten Zeichnungen genommen wird. Es zeigen:
- Fig. 1: eine schematische Darstellung eines Ausführungsbeispiels einer erfindungsgemäßen Vorrichtung zum Auslesen von in Speicherleuchtstoffplatten gespeicherten Röntgeninformationen,
- Fig. 2: eine schematische Schnittdarstellung einer Seitenansicht der Vorrichtung mit einer Eingabeeinheit und einem Aufnahmeschacht,
- Fig. 3: eine schematische Schnittdarstellung einer weiteren Seitenansicht der Vorrichtung mit einer Ausgabeeinheit,
- Fig. 4A-C: schematische Darstellungen von Draufsichten auf den Aufnahmeschacht und eine Verschiebeeinrichtung der Vorrichtung, wobei an einem Übergang des Aufnahmeschachts zu der Eingabeeinheit zwei voneinander beabstandete Ablenkelemente angeordnet sind,
- Fig. 5A-C: weitere schematische Darstellungen von Draufsichten auf den Aufnahmeschacht und die Verschiebeeinrichtung der Vorrichtung mit einer Veranschaulichung der Funktionsweise des linken Ablenkelements,
- Fig. 6A-C: weitere schematische Darstellungen von Draufsichten auf den Aufnahmeschacht und die Verschiebeeinrichtung der Vorrichtung mit einer Veranschaulichung der Funktionsweise des rechten Ablenkelements,
- Fig. 7A-D: schematische Darstellungen von Draufsichten auf den Aufnahmeschacht und die Verschiebeeinrichtung der Vorrichtung mit einer Veranschaulichung der Funktionsweise eines weiteren, rechten Ablenkelements, das in eine Sperr- und eine Passierposition verschwenkbar ist,
- Fig. 8A, B: schematische Darstellungen von Frontansichten auf eine Rückwand der Vorrichtung,
- Fig. 9A-D: schematische Darstellungen von Draufsichten auf den Aufnahmeschacht, die Verschiebeeinrichtung und eine Ausgabeeinheit der Vorrichtung mit einer Veranschaulichung der Funktionsweise von in der Rückwand der Ausgabeeinheit angeordneten Abdrückern,
- Fig. 10A-C: schematische Darstellungen einer ersten Seitenansicht, einer Draufsicht und einer zweiten Seitenansicht eines Transportbandes der Verschiebeeinrichtung mit einer Doppelnocke als Mitnehmer, die zwei einzelne Nocken als Teilmitnehmer aufweist, und
- Fig. 11: eine schematische Darstellung einer weiteren Frontansicht auf die Rückwand der Vorrichtung mit einer in der Rückwand angeordneten Erfassungseinrichtung.

Im Folgenden werden, sofern nicht anders angegeben, für gleiche oder gleichwirkende Elemente gleiche Bezugszeichen verwendet.

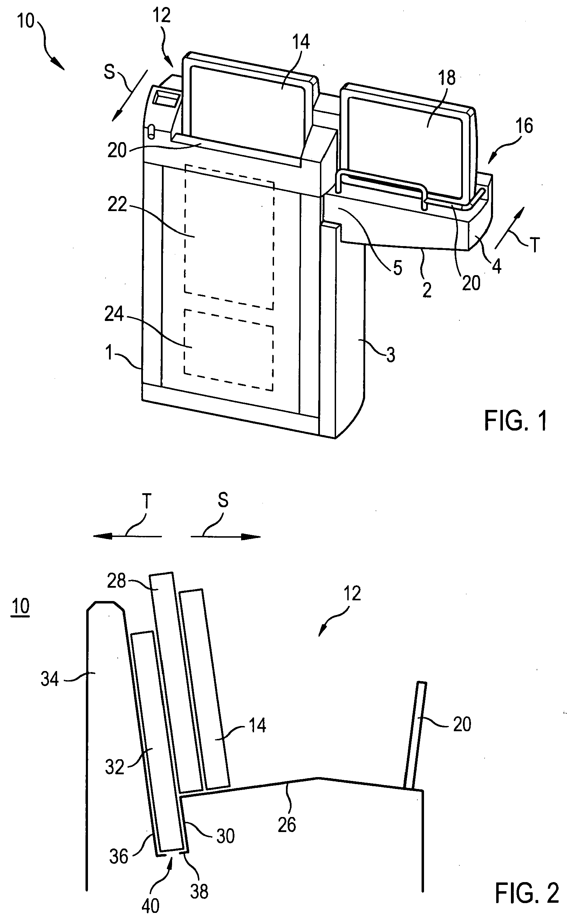

Fig. 1 zeigt eine schematische Darstellung eines Ausführungsbeispiels einer erfindungsgemäßen Vorrichtung 10 zum Auslesen von in Speicherleuchtstoffplatten gespeicherten Röntgeninformationen.

Die Vorrichtung 10 enthält eine Eingabeeinheit 12 zum Eingeben von mehreren Kassetten, in denen sich jeweils eine auszulesende Speicherleuchtstoffplatte befindet. Die Kassetten weisen jeweils an einer ihrer schmalen Stirnseiten einen Verschluss auf, der in der Vorrichtung 10 geöffnet und geschlossen werden kann. Die Kassetten werden von einer Bedienperson jeweils hochkant und mit dem Verschluss nach unten in die Eingabeeinheit 12 hinein gestellt dort hintereinander in einer Stapelrichtung S gestapelt.

In Fig. 1 ist eine, in Stapelrichtung S betrachtet, vordere Kassette 14 in der Eingabeeinheit 12 zu sehen. Direkt neben der Eingabeeinheit 12 ist eine Ausgabeeinheit 16 zum Ausgeben von Kassetten angeordnet. In der Ausgabeeinheit 16 werden diejenigen Kassetten hintereinander gestapelt, deren Speicherleuchtstoffplatten bereits ausgelesen wurden. Die Kassetten werden in der Ausgabeeinheit 16 in einer entgegengesetzten Stapelrichtung T gestapelt, die der Stapelrichtung S entgegengesetzt gerichtet ist.

In der Fig. 1 ist eine, in die entgegengesetzte Stapelrichtung T betrachtet, hintere Kassette 18 dargestellt. Die in der Ausgabeeinheit 16 gestapelten Kassetten können von der Bedienperson entnommen und für eine erneute Röntgenaufnahme eingesetzt werden. Sowohl die Eingabeeinheit 12 als auch die Ausgabeeinheit 16 sind zur Bedienseite der Vorrichtung 10 hin jeweils mit einer Leiste 20 als Umrandung versehen. Dadurch kann vorteilhafterweise ein Herausfallen einer in der Eingabeeinheit 12 oder der Ausgabeeinheit 16 befindlichen Kassette verhindert werden.

Unterhalb der Eingabeeinheit 12 befindet sich im Innern der Vorrichtung 10 eine - nur schematisch angedeutete - Ausleseeinheit 22, in der die aus einer der Kassetten heraus und in die Ausleseeinheit 22 hinein transportierte Speicherleuchtstoffplatte in an sich bekannter Weise ausgelesen und ein nach dem Auslesen in der Speicherleuchtstoffplatte verbliebenes Restbild gelöscht wird. Nach dem Auslesen der Speicherleuchtstoffplatte wird diese wieder in die zugehörige Kassette zurück transportiert. Die Kassette selbst verbleibt während des Auslesevorgangs außerhalb der Vorrichtung 10. Die in die Vorrichtung 10 eingegebenen Kassetten können vorteilhafterweise einen RF (Radio Frequency)-Chip aufweisen, der vor dem Auslesen der Speicherleuchtstoffplatte von einer geeigneten Leseeinrichtung ausgelesen wird. In dem RF-Chip können verschiedene Angaben zu der Kassette, insbesondere ihr Format, oder zu der in der Speicherleuchtstoffplatte vorhandenen Röntgenaufnahme abgespeichert sein.

Die Vorrichtung 10 enthält zum Steuern aller erforderlichen Abläufe und Vorgänge eine - ebenfalls nur schematisch angedeutete - Steuereinrichtung 24, die mit verschiedenen, von ihr zu steuernden Komponenten der Vorrichtung 10 verbunden ist.

Die Eingabeeinheit 12 und die Ausleseeinheit 22 sind gemeinsam in einem ersten Gehäuseteil 1 untergebracht, welcher auf dem Boden steht. Die Ausgabeeinheit 16 ist in einem zweiten Gehäuseteil 2 untergebracht, welcher im Seitenbereich 3 des ersten Gehäuseteils 1 an diesem freitragend angeordnet ist und die Form eines Auslegers oder Seitenarms aufweist. Die Vorrichtung 10 benötigt dadurch nur eine Standfläche für den ersten Gehäuseteil 1, wohingegen für den zweiten Gehäuseteil 2 keine zusätzliche Standfläche erforderlich ist.

Der als Ausleger ausgebildete zweite Gehäuseteil 2 weist bezüglich des ersten Gehäuseteils 1 ein distales Ende 4 sowie ein proximales Ende 5 auf, wobei die in vertikaler Richtung verlaufende Höhe und/oder die senkrecht dazu verlaufende Tiefe des distalen Endes 4 kleiner ist als die Höhe bzw. Tiefe des proximalen Endes 5.

Fig. 2 zeigt eine schematische Schnittdarstellung einer Seitenansicht der Eingabeeinheit 12. Die Eingabeeinheit 12 weist eine Neigungsfläche 26 auf, die hier in Stapelrichtung S gegenüber der Horizontalen geneigt ausgestaltet ist. Dadurch können die in die Eingabeeinheit 12 hinein gestellten Kassetten aufgrund ihrer Schwerkraft in die entgegengesetzte Stapelrichtung T rutschen. Die Neigung der Neigungsfläche 26 gegenüber der Horizontalen beträgt vorzugsweise 5° bis 10°. In der Eingabeeinheit 12 befinden sich im hier dargestellten Beispiel zwei Kassetten 14 und 28.

Die Vorrichtung 10 weist einen in die entgegengesetzte Stapelrichtung T an die Neigungsfläche 26 der Eingabeeinheit 12 angrenzenden, länglichen Aufnahmeschacht 30 zum Aufnehmen einer der mehreren Kassetten auf, der gegenüber der Neigungsfläche 26 um vorzugsweise 10 bis 50 mm abgesenkt ist. Die auf der Neigungsfläche 26 in hinterster Position befindliche Kassette rutscht aufgrund der Schwerkraft weitgehend selbstständig in den Aufnahmeschacht 30, sofern dieser nicht bereits von einer Kassette belegt ist.

Im Ausführungsbeispiel nach Fig. 2 ist eine von dem Aufnahmeschacht 30 aufgenommene Kassette 32 dargestellt. In der entgegengesetzten Stapelrichtung T schließt sich an den Aufnahmeschacht 30 eine Rückwand 34 der Vorrichtung 10 an. Die Rückwand 34 verläuft vorzugsweise durchgehend von der Eingabeeinheit 12 zur Ausgabeeinheit 16 und weist eine Neigungsfläche 36 auf, die gegenüber der Vertikalen geneigt ist. Dadurch können die im Aufnahmeschacht 30 und in der Eingabeeinheit 12 befindlichen Kassetten 32, 28 und 14 jeweils mit einer ihrer breiten Seiten stabil an der Rückwand 34 anliegen. Die Neigungen der Neigungsflächen 26, 36 sind vorzugsweise aufeinander abgestimmt, so dass die beiden Neigungsflächen 26, 36 in einem rechten Winkel zueinander stehen.

In einer unteren Auflagefläche 38 des Aufnahmeschachts 30 ist eine Eingabeöffnung 40 vorgesehen, durch die hindurch die Speicherleuchtstoffplatte, die in der in dem Aufnahmeschacht 30 befindlichen Kassette vorhanden ist, in das Innere der Vorrichtung 10 transportiert werden kann. Die Eingabeöffnung 40 ist länglich und schlitzförmig ausgebildet, wobei ihre Länge mindestens so groß ist wie die entsprechende Länge des größten in der Vorrichtung 10 auszulesenden Speicherleuchtstoffplattenformats. Die Breite der Eingabeöffnung 40 ist ausreichend groß gewählt, damit die Speicherleuchtstoffplatten bei ihren Entnahmen aus den Kassetten auch bei kleineren Lageschwankungen nicht durch die Eingabeöffnung 40 behindert werden. In der Endposition der in dem Aufnahmeschacht 30 befindlichen Kassette 32 befindet sich deren Verschluss unmittelbar über der Eingabeöffnung 40.

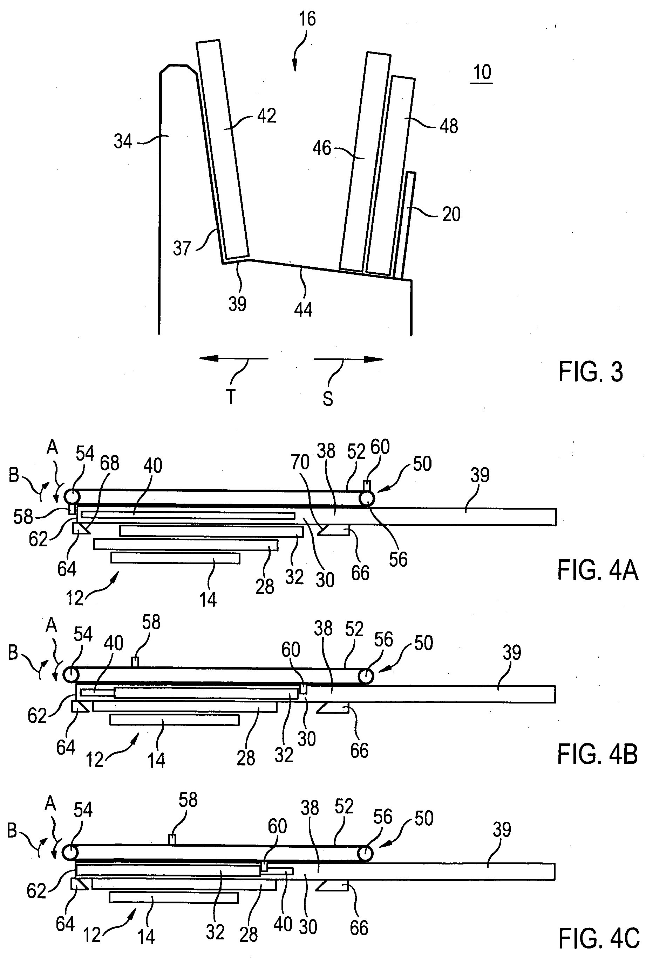

Fig. 3 zeigt eine schematische Schnittdarstellung einer weiteren Seitenansicht der Vorrichtung 10. Hier ist die Seitenansicht der Ausgabeeinheit 16 mit der Rückwand 34 zu sehen. Die Rückwand 36 weist eine Neigungsfläche 37 auf, an welcher eine Kassette 42, in der sich eine bereits ausgelesene Speicherleuchtstoffplatte befindet, flächig anliegt. Die Kassette 42 wurde im Aufnahmeschacht 30 entlang der unteren Auflagefläche 38 des Aufnahmeschachts 30 (siehe Fig. 2) sowie entlang einer in der Ausgabeeinheit 16 befindlichen Auflagefläche 39, welche mit der unteren Auflagefläche 38 des Aufnahmeschachts 30 fluchtet und insbesondere an diese angrenzt, von der Eingabeeinheit 12 in die Ausgabeeinheit 16 geschoben. Die Neigungsfläche 37 der Rückwand 34 im Bereich der Ausgabeeinheit 16 ist vorzugsweise in Flucht mit der Neigungsfläche 36 der Rückwand 34 im Bereich der Eingabeeinheit 12 angeordnet.

Die Auflagefläche 39 der Ausgabeeinheit 16 hat im Wesentlichen dieselbe Breite wie die untere Auflagefläche 38 des Aufnahmeschachts 30 der Eingabeeinheit 12, liegt jedoch nicht in einem Schacht, sondern grenzt unmittelbar an eine Neigungsfläche 44, die in Stapelrichtung S gegenüber der Horizontalen geneigt ist und von einer Vorderkante der Auflagefläche 39 zur Vorderseite der Ausgabeeinheit 16 hin, von welcher aus ein Bediener Kassetten 46, 48 entnehmen kann, abfällt. Durch die Schräge der Neigungsfläche 44 können in die Ausgabeeinheit 16 ausgegebene Kassetten aufgrund ihrer Schwerkraft über die Neigungsfläche 44 zu der im Bereich der Vorderseite der Ausgabeeinheit 16 befindlichen Leiste 20 rutschen. Dort bildet sich dann ein Stapel von Kassetten mit bereits ausgelesenen Speicherleuchtstoffplatten. In der Fig. 3 sind diesbezüglich Kassetten 46 und 48 dargestellt.

Fig. 4A-C zeigen schematische Darstellungen von Draufsichten auf den Aufnahmeschacht 30 und eine Verschiebeeinrichtung 50 der Vorrichtung 10, wobei der Ablauf des Aufnehmens der Kassette 32 von dem Aufnahmeschacht 30 und das Positionieren der von dem Aufnahmeschacht 30 aufgenommenen Kassette 32 mittels der Verschiebeeinrichtung 50 gezeigt wird.

Die Verschiebeeinrichtung 50 dient zum horizontalen Verschieben der in dem Aufnahmeschacht 30 befindlichen Kassette 32 entlang eines Verschiebeweges. Die Verschiebeeinrichtung 50 ist in der Rückwand 34 angeordnet und weist ein als Endlosband ausgebildetes Transportband 52 auf. Das Transportband 52 wird durch zwei horizontal voneinander beabstandete Umlenkrollen 54 und 56 geführt. Zumindest eine der Umlenkrollen 54, 56 ist mit einem Antrieb verbunden, durch den sie in zwei entgegengesetzte Transportrichtungen A und B gedreht werden kann. Der Antrieb ist mit der Steuereinrichtung 24 verbunden. Durch die Anordnung der Umlenkrollen 54, 56 befindet sich das Transportband 52 in einem gespannten Zustand.

An dem Transportband 52 sind zwei Mitnehmer zum Mitnehmen der in dem Aufnahmeschacht befindlichen Kassette 32 angeordnet. Die Mitnehmer sind hier Nocken 58 und 60, die ausgehend von dem Transportband 52 senkrecht nach außen ragen. Die beiden Nocken 58, 60 sind entlang der Länge des Transportbandes 52 voneinander beabstandet. Dabei ist der Abstand zwischen den beiden Nocken 58, 60 größer als die größte Breite der horizontalen Breiten der in der Vorrichtung 10 auszulesenden Kassetten.

Im vorliegenden Ausführungsbeispiel ist der Abstand zwischen den beiden Nocken 58, 60 im Wesentlichen so groß wie der Abstand zwischen den beiden Umlenkrollen 54, 56. Dadurch ist eine der Nocken 58, 60 zum Aufnahmeschacht 30 hingewandt und die andere der Nocken 58, 60 vom Aufnahmeschacht 30 abgewandt. Die Nocken 58, 60 sind vorzugsweise im Wesentlichen um 180° phasenverschoben. Die Nocke 58 wird insbesondere dazu eingesetzt, die in dem Aufnahmeschacht 30 befindliche Kassette in die Transportrichtung A zu verschieben. Die Nocke 60 dagegen wird insbesondere dazu eingesetzt, die in dem Aufnahmeschacht 30 befindliche Kassette in die Transportrichtung B zu verschieben. Das Verschieben der Kassette erfolgt durch ein Zustandekommen einer Wirkverbindung zwischen der jeweiligen Nocke 58, 60 und einer der vertikal verlaufenden Schmalseiten der Kassette.

Fig. 4A zeigt die sich in der Eingabeeinheit 12 befindlichen Kassetten 14, 28, 32. Der Aufnahmeschacht 30 ist in der dargestellten Situation frei, so dass die Eingabeöffnung 40 sowie die Auflagefläche 38 gut erkennbar sind. Durch die Schräge der Neigungsfläche 26 rutscht die Kassette 32 in den Aufnahmeschacht 30 und kommt auf der Auflagefläche 38 zu liegen. Dies ist in der Fig. 4B dargestellt, in der sich die Kassette 32 in dem Aufnahmeschacht 30 befindet.

In der Situation nach Fig. 4B ist das Transportband 52, ausgehend von der in Fig. 4A dargestellten Situation, in die Transportrichtung B verfahren worden. Die Nocke 60 steht in Wirkverbindung mit der rechten Schmalseite der Kassette 32. Durch Weitertransportieren des Transportbandes 52 wird die Kassette 32 auf der Auflagefläche 38 horizontal in die Transportrichtung B verschoben, bis sie an einem im Aufnahmeschacht 30 befindlichen Anschlag 62 anstößt. Diese Situation ist in der Fig. 4C dargestellt. Der Anschlag 62 ist in einem Randbereich des Aufnahmeschachts 30 so angeordnet, dass der Verschluss der Kassette 32 beim Anschlagen an den Anschlag 62 genau über der Eingabeöffnung 40 liegt.

Im Boden des Aufnahmeschachts 30 ist ein Klemmmechanismus zum Festklemmen der in dem Aufnahmeschacht 30 positionierten Kassette 32 versenkt (nicht dargestellt). Dieser Klemmmechanismus wird zum Festklemmen der Kassette aus dem Boden herausgefahren. Nach dem Auslesen der in der Kassette enthaltenen Speicherleuchtstoffplatte und deren Hineintransportieren in die positionierte Kassette wird der Klemmmechanismus wieder im Boden versenkt, um die Kassette in die Ausgabeeinheit 16 zu verschieben. Der Klemmmechanismus enthält vorzugsweise einen Fehlererkennungsmechanismus, wenn eine zu klemmende Kassette nicht ordnungsgemäß von dem Aufnahmeschacht 30 aufgenommen wurde. Über den Fehlererkennungsmechanismus könne beispielsweise auch Fremdkörper oder falsch eingegebene Kassetten erkannt werden.

Der Klemmmechanismus ist in der vorliegenden Anmeldung nicht weiter beschrieben. Bezüglich der Offenbarung des Klemmmechanismus' wird auf den diesbezüglichen Offenbarungsgehalt der Europäischen Patentanmeldung EP 1 640 800 A1 verwiesen, der hiermit in den Offenbarungsgehalt der vorliegenden Anmeldung aufgenommen wird. Dies gilt insbesondere auch für die Beschreibung des lichtdichten Verschließens der festgeklemmten Kassette.

In den Fig. 4A-C sind an einem Übergang des Aufnahmeschachts 30 zu der Eingabeeinheit 12 zwei horizontal voneinander beabstandete Ablenkelemente 64 und 66 angeordnet. Das Anlenkelement 64 ist hier in unmittelbarer Nähe des Anschlags 62 im Randbereich des Aufnahmeschachts 30 angeordnet. Vorzugsweise sind der Anschlag 62 und das Ablenkelement integral miteinander verbunden, so dass das Ablenkelement 64 Teil des Anschlags 62 ist. Das Ablenkelement 66 ist an einem Übergang der Eingabeeinheit 12 zu der Ausgabeeinheit 16, d. h. an einem Ausgang der Eingabeeinheit 12, angeordnet.

Die Ablenkelemente 64, 66 dienen zum Ablenken der in der Eingabeeinheit befindlichen nächsten Kassette 28, die der von dem Aufnahmeschacht 30 aufgenommenen Kassette 32 benachbart ist, wenn die nächste Kassette 28 zumindest teilweise in den Verschiebeweg der Kassette 32 ragt. Die Ablenkelemente 64, 66 weisen im dargestellten Beispiel einen abgeschrägten Führungsbereich 68 bzw. 70 zum Führen der nächsten Kassette 28 in Stapelrichtung S auf. Die Oberflächen der Führungsbereiche 68, 70 sind vorteilhafterweise mit einem Material versehen, das beim Ablenken der nächsten Kassette 28 zwischen dieser und den Führungsbereichen 68, 70 einen niedrigen Reibungskoeffizienten gewährleistet.

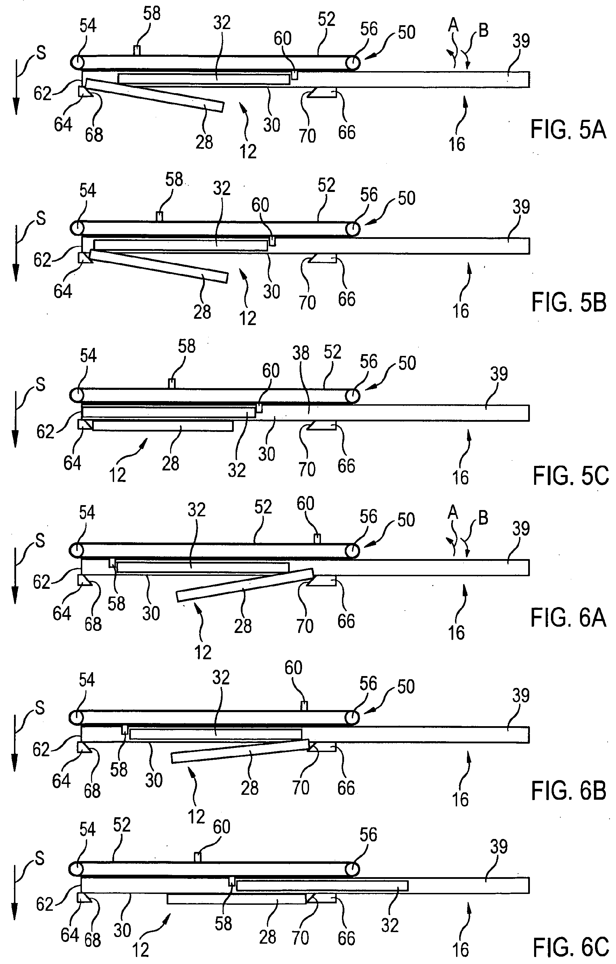

Anhand der Fig. 5A-C soll die Funktionsweise des linken Ablenkelements 64 veranschaulicht werden. Fig. 5A zeigt eine Situation, in der die in der Eingabeeinheit 12 befindliche nächste Kassette 28 teilweise in den Verschiebeweg der in dem Aufnahmeschacht 30 befindlichen Kassette 32 ragt. Das Verschieben der Kassette 32 in Richtung des Anschlags 62 wird somit durch die Kassette 28 behindert. Beim Verschieben der Kassette 32 in Transportrichtung B kommt die Kassette 32 zwangsläufig mit der Kassette 28 in Kontakt. Diese wird zwischen der Kassette 32 und dem Ablenkelement 64 eingeklemmt. Durch das weitere Verschieben der Kassette 32 mittels der Verschiebeeinrichtung 50 wird eine Kraft auf die Kassette 28 in Stapelrichtung S ausgeübt. Dadurch wird die Kassette 28 aufgrund der Führung durch den Führungsbereich 68 des Ablenkelements 64 aus dem Verschiebeweg der Kassette 32 heraus bewegt. Dies ist in der Fig. 5B dargestellt. Die eingeklemmte Schmalseite der nächsten Kassette 28 bewegt sich entlang des Führungsbereichs 68 und die der eingeklemmten Schmalseite gegenüber liegende Schmalseite bewegt sich in die entgegengesetzte Stapelrichtung T. Fig. 5C zeigt eine Situation, in der die Kassette 28 vollständig aus dem Verschiebeweg der Kassette 32 entfernt ist und parallel zu und flächig an der im Aufnahmeschacht bereits am Anschlag 62 positionierten Kassette 32 liegt.

Anhand der Fig. 6A-C soll die Funktionsweise des rechten Ablenkelements 66 veranschaulicht werden. Diese Funktionsweise stimmt weitgehend mit derjenigen des linken Ablenkelements 64 überein, so dass sie hier nicht mehr im Detail erläutert zu werden braucht. Bei dem vorliegenden Ausführungsbeispiel gemäß der Fig. 6A-C wird die in dem Aufnahmeschacht 30 befindliche Kassette 32, deren Speicherleuchtstoffplatte bereits ausgelesen wurde, entlang des Aufnahmeschachts 30 in Richtung Ausgabeeinheit 16 verschoben. Dabei wird ihr Verschiebeweg von der Kassette 28 versperrt. In der Fig. 6C ist zu sehen, wie die Kassette 32 das rechte Ablenkelement 66 passiert und in die Ausgabeeinheit 16 überführt wird.

In den zuvor anhand der Fig. 5A-C und 6A-C beschriebenen Ausführungsbeispielen haben die Ablenkelemente 64, 66 abgeschrägte Führungsbereiche 68 bzw. 70. Es ist ebenso möglich, die Ablenkelemente 64, 66 mit Führungsbereichen zu versehen, die eine andere Form aufweisen. Beispielsweise können Ablenkelemente 64, 66 abgerundete Führungsbereiche aufweisen. Es ist auch möglich, die Ablenkelemente 64, 66 mit unterschiedlich ausgestalteten Führungsbereichen zu versehen.

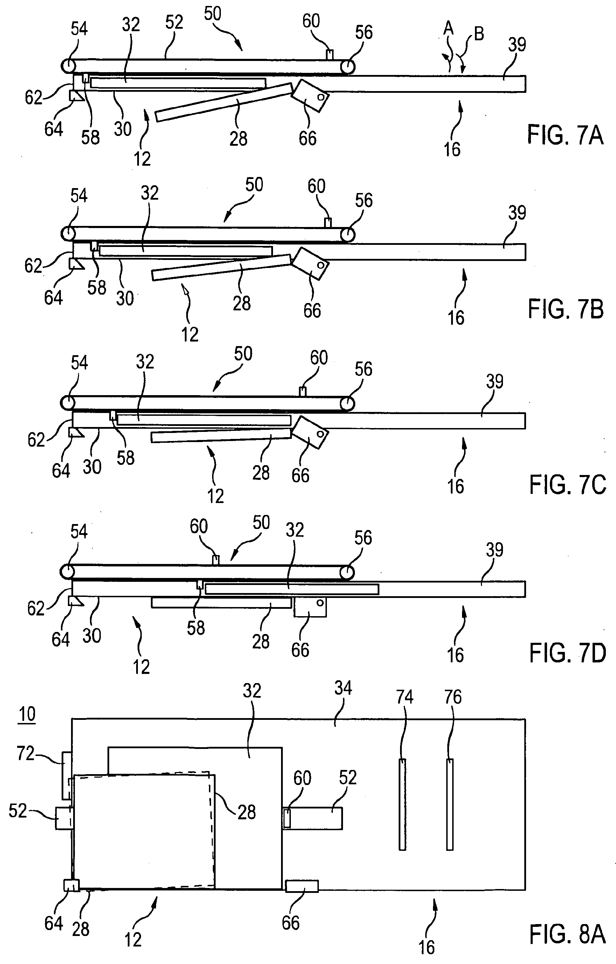

Fig. 7A-D zeigen schematische Darstellungen von Draufsichten auf den Aufnahmeschacht 30 und die Verschiebeeinrichtung 50 der Vorrichtung 10. In dem hier gewählten Ausführungsbeispiel hat das rechte Ablenkelement 66 eine rechteckige Form. Zudem ist es in eine Sperr- und eine Passierposition verschwenkbar. In der Sperrposition versperrt es den Verschiebeweg der im Aufnahmeschacht befindlichen Kassette 32 in die Ausgabeeinheit 16. In den Fig. 7A-C befindet sich das Ablenkelement 66 in dieser Sperrposition. In der Passierposition ist das Ablenkelement 66 aus dem Verschiebeweg der Kassette 32 heraus bewegt worden. Dies ist in Fig. 7D dargestellt. Das Ablenkelement 66 stellt somit eine Art Tor für den Übergang zu der Ausgabeeinheit 16 dar.

Das in die Sperr- und Passierposition verschwenkbare Ablenkelement 66 kann so ausgestaltet sein, dass die in die Transportrichtung A, in Richtung der Ausgabeeinheit 16 verschobene Kassette 32 aufgrund eines mit dem Ablenkelement 66 stattfindenden Kontakts das Ablenkelement in seine Passierposition bringt und damit den Verschiebeweg frei macht. Alternativ kann das Ablenkelement 66 von der Steuereinrichtung 24 so angesteuert werden, dass es mittels eines Antriebs von der Sperr- in die Passierposition gebracht wird. Dies kann vorzugsweise kurz vor dem Eintreffen der Kassette 32 bei Erreichen einer vorgegebenen Verschiebeposition der Kassette 32 erfolgen. Dadurch kann sichergestellt werden, dass vor dem Verschwenken in die Passierposition eine ggf. in den Verschiebeweg ragende Kassette aus diesem heraus befördert worden ist.

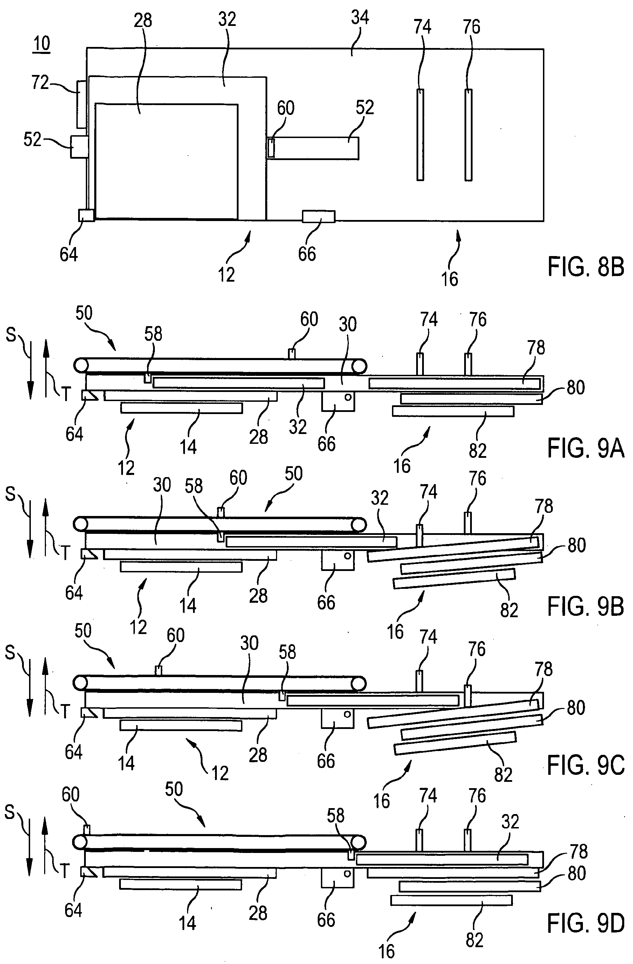

Fig. 8A, B zeigen schematische Darstellungen von Frontansichten der Vorrichtung 10. Die Frontansichten zeigen eine Sicht auf die Rückwand 34. Zu sehen ist in den Fig. 8A, B ein Positionierungselement 72, das oberhalb des Aufnahmeschachts 30 und über dem Ablenkelement 64 angeordnet ist. Das Positionierungselement 72 dient hier einerseits zum exakten horizontalen Positionieren der in dem Aufnahmeschacht 30 befindlichen Kassette 32 und gewährleistet andererseits ein zuverlässiges Herausbewegen der nächsten Kassette 28 aus dem Verschiebeweg, indem ein Verkippen der Kassette 28 über das Positionierungselement 72 hinaus - wie in Fig. 8A mit gestrichelten Linien dargestellt - verhindert wird. Das Resultat ist in Fig. 8B dargestellt, welche die im Aufnahmeschacht befindliche und am Positionierungselement 72 ausgerichtete Kassette 32 sowie die mit hoher Zuverlässigkeit aus dem Verschiebeweg herausbewegte und nunmehr parallel zur Kassette 38 ausgerichtete nächste Kassette 28 zeigt.

Die Fig. 8A, B zeigen ferner zwei horizontal voneinander beabstandete Abdrücker 74 und 76 in der Rückwand 34 der Ausgabeeinheit 16. Die Abdrücker 74, 76 sind in die Stapelrichtung S verfahrbar und können somit eine in Stapelrichtung S vor ihnen befindliche Kassette in die Stapelrichtung S verschieben. Diese gerät dadurch auf die Neigungsfläche 3 44 der Ausgabeeinheit 16 und rutscht in Richtung der Leiste 20 der Ausgabeeinheit 16 (siehe Fig. 3). Die Abdrücker 74, 76 sind mit der Steuereinrichtung 24 verbunden, die deren Betätigung steuert. Die Steuereinrichtung 24 steuert beim Verschieben einer in dem Aufnahmeschacht 30 befindlichen Kassette in die Ausgabeeinheit 16 ein sequentielles Verfahren der Abdrücker 74, 76.

Dies ist in den Fig. 9A-D näher verdeutlicht. Beim sequentiellen Verschieben der Abdrücker 74, 76 wird beim Verschieben der in dem Aufnahmeschacht 30 befindlichen Kassette 32 zunächst der zur Eingabeeinheit 12 näher platzierte Abdrücker 74 in die Stapelrichtung S verfahren. In der Ausgabeeinheit 16 bereits befindliche Kassetten 78, 80, 82 werden in Stapelrichtung S verschoben. Dies ist in Fig. 9B zu sehen. Die Kassette 32 kann dann in die Ausgabeeinheit 16 verschoben werden. Anschließend wird der von der Eingabeeinheit 12 weiter entfernte Abdrücker 76 in die Stapelrichtung S verfahren. Der Abdrücker 74 wird gleichzeitig oder danach in die entgegengesetzte Stapelrichtung T zurück gefahren. Die Kassette 32 kann dann an dem Abdrücker 74 vorbei weiter in die Ausgabeeinheit 16 verschoben werden. Dies ist in der Fig. 9C dargestellt. Zuletzt wird dann auch der Abdrücker 76 in die entgegengesetzte Stapelrichtung T zurück gefahren. Die Kassette 32 kann dann vollständig in die Ausgabeeinheit 16 verschoben werden. Dies ist in der Fig. 9D dargestellt.

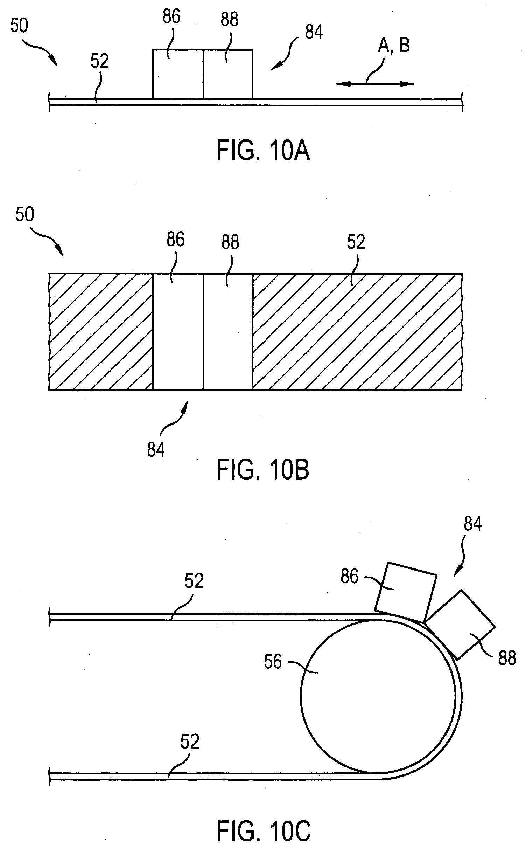

Fig. 10A-C zeigen verschiedene Ansichten des Transportbandes 52 der Verschiebeeinrichtung 50 mit einer sog. Doppelnocke 84 als Mitnehmer, die zwei einzelne Nocken 86, 88 als Teilmitnehmer aufweist. Die beiden Nocken 86, 88 sind voneinander getrennt und entlang der Länge des Transportbandes 52 unmittelbar aneinander grenzend an dem Transportband 52 befestigt.

Fig. 10A zeigt eine erste Seitenansicht, Fig. 10B eine Draufsicht und Fig. 10C eine zweite Seitenansicht des Transportbandes 52 mitsamt den einzelnen Nocken 86, 88. In der Fig. 10C ist zusätzlich die Umlenkrolle 56 und die Situation dargestellt, in der die Doppelnocke 84 um die Umlenkrolle 56 transportiert wird. Die beiden einzelnen Nocken 86, 88 werden durch die Krümmung der Umlenkrolle 56, in Transportrichtung B betrachtet, voneinander getrennt.

Bei der Doppelnocke 84 wird diejenige der einzelnen Nocken 86 oder 88, die an der zu verschiebenden Kassette anliegt, von der jeweils anderen der beiden Nocken 86 bzw. 88 gestützt. Das Transportband 52 wird dadurch beim Verschieben der Kassette nicht so stark verformt. Beim Umlenken der Doppelnocke 84 erfolgt deren Umlauf um die Umlenkrolle 56 nahezu spannungs- und ruckfrei. Vorteilhafterweise sind beide Mitnehmer 58, 60 in Form einer solchen Doppelnocke 84 ausgestaltet.

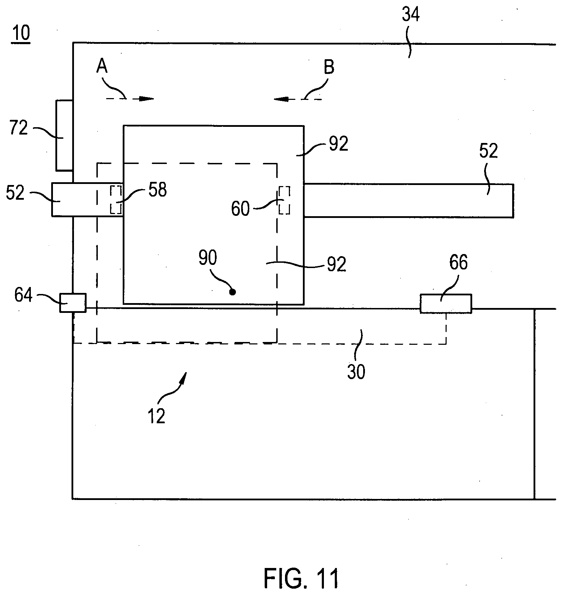

Fig. 11 zeigt eine schematische Darstellung einer weiteren Frontansicht auf die Rückwand 34 der Vorrichtung 10. Dabei ist in der Rückwand 34 eine Erfassungseinrichtung 90 zum Erfassen einer in Stapelrichtung S hintersten, nicht ordnungsgemäß von dem Aufnahmeschacht 30 aufgenommenen Kassette 92 angeordnet. Diese Erfassungseinrichtung 90 kann insbesondere durch eine Lichtschranke oder einen Tastschalter realisiert werden.

Die Erfassungseinrichtung 90 ist mit der Steuereinrichtung 24 verbunden, welche die von der Erfassungseinrichtung ermittelten Informationen verarbeitet, um das ordnungsgemäße Aufnehmen der Kassette 92 festzustellen. Sofern die Erfassungseinrichtung 90 eine nicht ordnungsgemäß in den Aufnahmeschacht 30 aufgenommene Kassette 92 detektiert, steuert die Steuereinrichtung 24 die Verschiebeeinrichtung 50 so an, dass diese die Kassette 92 in die beiden Transportrichtungen A und B hin- und herverschiebt. Die Verschiebeeinrichtung 50 führt dabei ein zumindest kurzzeitiges aufeinanderfolgendes Verfahren des Transportbandes 52 in die zwei entgegengesetzten Transportrichtungen durch. Durch dieses Hin- und Herverschieben wird erreicht, dass die Kassette 92 schließlich in den Aufnahmeschacht 30 rutscht und dort verschoben und korrekt ausgerichtet werden kann.

Fig. 11 zeigt die Kassette 92 in einer Situation, in der sie nicht ordnungsgemäß von dem Aufnahmeschacht 30 aufgenommen wurde. Die Kassette 92 befindet sich oberhalb des Aufnahmeschachts 30. Mittels der Nocke 58 wird die Kassette 92 somit kurzzeitig nach rechts in die Transportrichtung A verschoben. Diese Situation ist in der Fig. 11 mit durchgezogenen Linien dargestellt. Nach dem kurzzeitigen Verschieben der Kassette 92 in die Transportrichtung A steuert die Steuereinrichtung 24 einen Wechsel der Transportrichtung und verfährt das Transportband 52, und damit die Kassette 92, in die Transportrichtung B. Die Nocke 60 verschiebt die Kassette 92 dadurch wieder nach links in die Transportrichtung B. Auf diese Weise wird bewirkt, dass die Kassette 92 in den Aufnahmeschacht 30 fällt oder rutscht. Diese Situation ist in der Fig. 11 mit gestrichelten Linien dargestellt. Die Kassette 92 befindet sich dann in dem Aufnahmeschacht 30 und kann - wie bereits oben näher erläutert - in Richtung des Positionierungselements 72 verschoben und an diesem horizontal ausgerichtet werden.

Zur weiteren Verbesserung des Zuführens der Kassetten in den Aufnahmeschacht 30 kann eine aktiv betriebene Zuführwalze (nicht dargestellt) in der Rückwand 34 oder in der Neigungsfläche 26 (siehe Fig. 2) angeordnet sein, mit der die in Stapelrichtung S hinterste Kassette 92 in den Aufnahmeschacht 30 gezogen werden kann. Es ist auch möglich, die Zuführwalze so auszugestalten, dass ein Stapel von Kassetten, der ggf. auf der Kassette 92 lastet, ein wenig in Stapelrichtung S zurückgeschoben wird, um die Kassette 92 zu entlasten.

## Patentansprüche

1. Vorrichtung (10) zum Auslesen von in Speicherleuchtstoffplatten gespeicherten Röntgeninformationen mit
- einer Eingabeeinheit (12), in welcher mehrere Kassetten (14, 28, 32), in denen sich jeweils eine auszulesende Speicherleuchtstoffplatte befindet, hintereinander in einer Stapelrichtung (S) stapelbar sind,
- einem länglichen Aufnahmeschacht (30) zum Aufnehmen einer der Kassetten (32), wobei der Aufnahmeschacht (30) an die Eingabeeinheit (12) angrenzt und eine längliche Eingabeöffnung (40) aufweist, durch welche hindurch die Speicherleuchtstoffplatte, die sich in der vom Aufnahmeschacht (30) aufgenommenen Kassette (32) befindet, in das Innere der Vorrichtung (10) transportierbar ist,
- einer Verschiebeeinrichtung (50) zum horizontalen Verschieben der im Aufnahmeschacht (30) befindlichen Kassette (32) entlang eines Verschiebeweges und
- einem Ablenkelement (64, 66) zum Ablenken einer in der Eingabeeinheit (12) befindlichen nächsten Kassette (28), die zumindest teilweise in den Verschiebeweg ragt, **dadurch gekennzeichnet, dass** das Ablenkelement (64, 66) so angeordnet und/oder ausgestaltet ist, dass beim horizontalen Verschieben der im Aufnahmeschacht (30) befindlichen Kassette (32) entlang des Verschiebeweges aufgrund eines Kontakts zwischen der im Aufnahmeschacht (30) befindlichen Kassette (32) und der zumindest teilweise in den Verschiebeweg ragenden nächsten Kassette (28) auf die nächste Kassette (28) eine Kraft in Stapelrichtung (S) ausgeübt wird, wobei diese gegen das Ablenkelement gedrückt und dabei aus dem Verschiebeweg heraus bewegt wird.

2. Vorrichtung nach Anspruch 1, wobei das Ablenkelement (64, 66) in einem Übergangsbereich zwischen der Eingabeeinheit (12) und dem Aufnahmeschacht (30) angeordnet ist.

3. Vorrichtung nach Anspruch 1 oder 2, wobei das Ablenkelement (64, 66) einen abgeschrägten Führungsbereich (68, 70) zum Führen der in der Eingabeeinheit (12) befindlichen nächsten Kassette (28) aus dem Verschiebeweg heraus aufweist.

4. Vorrichtung nach einem der vorhergehenden Ansprüche, wobei das Ablenkelement (64, 66) in einem Randbereich des Aufnahmeschachts (30) angeordnet ist.

5. Vorrichtung nach einem der vorhergehenden Ansprüche, wobei oberhalb des Ablenkelements (64, 66) ein Positionierungselement (72) zum Positionieren der von dem Aufnahmeschacht (30) aufgenommenen Kassette (32) vorgesehen ist und das Positionierungselement (72) so angeordnet und/oder ausgestaltet ist, dass ein Verkippen der in den Verschiebeweg ragenden nächsten Kassette (28) über das Positionierungselement (72) hinaus verhindert wird.

6. Vorrichtung nach einem der vorhergehenden Ansprüche, wobei das Ablenkelement (66) verschwenk- und/oder verfahrbar angeordnet ist und in den Verschiebeweg oder aus dem Verschiebeweg geschwenkt bzw. gefahren werden kann.

7. Vorrichtung nach Anspruch 6, wobei das Ablenkelement (66) in eine Sperrposition und in eine Passierposition verschwenk- bzw. verfahrbar und so ausgestaltet und/oder angeordnet ist, dass es in seiner Sperrposition den Verschiebeweg für das Verschieben der im Aufnahmeschacht (30) befindlichen Kassette (32) versperrt und in seiner Passierposition diesen Verschiebeweg freigibt.

8. Vorrichtung nach Anspruch 7, wobei das Ablenkelement (66) so ausgestaltet und angeordnet ist, dass beim Verschieben der im Aufnahmeschacht (30) befindlichen Kassette (32) aufgrund eines Kontakts zwischen der Kassette (32) und dem Ablenkelement (66) dieses aus seiner Sperrposition in seine Passierposition gebracht wird.

9. Vorrichtung nach Anspruch 7, wobei eine Steuerung (24) zum Steuern des Verschwenkens bzw. Verfahrens des Ablenkelements (66) in seine Sperrposition und Passierposition vorhanden ist und die Steuerung (24) so ausgestaltet ist, dass das Verschwenken bzw. Verfahren des Ablenkelements (66) von seiner Sperrposition in seine Passierposition abhängig von einem Erreichen einer vorgegebenen Position der in dem Aufnahmeschacht (30) befindliche Kassette (32) bei ihrem Verschieben gesteuert wird.

10. Vorrichtung nach einem der vorhergehenden Ansprüche, wobei die Verschiebeeinrichtung (50) ein horizontal verfahrbares Transportband (52) aufweist, an dem zwei Mitnehmer (58, 60) zum Mitnehmen der von dem Aufnahmeschacht (30) aufgenommenen Kassette (32) angebracht sind, die entlang der Länge des Transportbandes (52) einen Abstand voneinander aufweisen, welcher größer ist als die größte Breite der horizontalen Breiten der mehreren Kassetten (14, 28, 32).

11. Vorrichtung nach Anspruch 10, wobei wenigstens einer der beiden Mitnehmer (84) jeweils zwei einzelne Teilmitnehmer (86, 88) aufweist, die entlang der Länge des Transportbandes (52) unmittelbar angrenzend aneinander an dem Transportband (52) angebracht sind.

12. Vorrichtung nach einem der vorhergehenden Ansprüche, wobei eine Erfassungseinrichtung (90) zum Erfassen einer in Stapelrichtung (S) hintersten, nicht ordnungsgemäß von dem Aufnahmeschacht (30) aufgenommenen Kassette (32) und eine Steuerung (24) zum Steuern des horizontalen Verfahrens des Transportbandes (52) vorhanden sind, wobei die Steuerung (24) so ausgestaltet ist, dass sie ein aufeinanderfolgendes Verfahren des Transportbandes (52) und ein dadurch bewirktes horizontales Verschieben der in der Stapelrichtung (S) hintersten Kassette (92) in zwei entgegengesetzte Transportrichtungen (A, B) bewirkt, sofern die Erfassungseinrichtung (90) eine nicht ordnungsgemäße Aufnahme der in der Stapelrichtung (S) hintersten Kassette (92) von dem Aufnahmeschacht (30) erfasst.

13. Vorrichtung nach einem der vorhergehenden Ansprüche, wobei sie eine Ausgabeeinheit (16) zum Ausgeben der mehreren Kassetten (14, 28, 32) aufweist, die in der Ausgabeeinheit (16) hintereinander, insbesondere in eine entgegengesetzte Stapelrichtung (T), stapelbar sind, und in der Ausgabeeinheit (16) zwei horizontal voneinander beabstandete Abdrücker (74, 76) vorhanden sind, die in die Stapelrichtung (S) verfahrbar sind.

14. Vorrichtung nach Anspruch 13, wobei eine Steuerung (24) zum Steuern der Abdrücker (74, 76) vorhanden ist und die Steuerung (24) so ausgestaltet ist, dass sie ein sequentielles Verfahren der zwei Abdrücker (74, 76) steuert, bei dem sie bei einem Verschieben der in dem Aufnahmeschacht (30) befindlichen Kassette (32) in die Ausgabeeinheit (16) zunächst den zur Eingabeeinheit (12) näher platzierten, in die Stapelrichtung (S) verfahrenen Abdrücker (74) und anschießend den von der Eingabeeinheit (12) weiter entfernten, in die Stapelrichtung (S) verfahrenen Abdrücker (76) in die entgegengesetzte Stapelrichtung (T) verfährt.

## Claims

1. Device (10) for reading out X-ray information stored in storage phosphor plates, comprising
- a feeding unit (12), in which multiple cassettes (14, 28, 32), which comprise a respective storage phosphor plate to be read out, can be stacked one after another in a stacking direction (S),
- an elongated take-up slot (30) for taking up one of the cassettes (32), wherein the take-up slot (30) is adjacent to the feeding unit (12) and comprises an elongated feed opening (40), through which the storage phosphor plate, which is located in the cassette (32) taken up from the take-up slot (30), can be transported into the inside of the device (10),
- a shifting device (50) for horizontally shifting the cassette (32) which is located in the take-up slot (30) along a shifting path and
- a deflection element (64, 66) for deflecting a next cassette (28) which is located in the feeding unit (12) and which protrudes at least partially into the shifting path,
**characterized in that** the deflection element (64, 66) is arranged and/or configured in such a way that, when horizontally shifting the cassette (32) located in the take-up slot (30) along the shifting path, a force is exerted on the next cassette (28) in the stacking direction (S) as a result of a contact between the cassette (32) located in the take-up slot (30) and the next cassette (28) protruding at least partially into the shifting path, wherein the next cassette (28) is pressed against the deflection element and is thereby moved out of the shifting path.

2. Device according to claim 1, wherein the deflection element (64, 66) is arranged in a transition area between the feeding unit (12) and the take-up slot (30).

3. Device according to claim 1 or 2, wherein the deflection element (64, 66) comprises a bevelled guiding area (68, 70) for guiding the next cassette (28) located in the feeding unit (12) out of the shifting path.

4. Device according to any of the preceding claims, wherein the deflection element (64, 66) is arranged in an edge portion of the take-up slot (30).

5. Device according to any of the preceding claims, wherein above the deflection element (64, 66) a positioning element (72) is provided for positioning the cassette (32) taken up from the take-up slot (30) and the positioning element (72) is arranged and/or configured in such a way that a tipping of the next cassette (28), which protrudes into the shifting path, over the positioning element (72) is averted.

6. Device according to any of the preceding claims, wherein the deflection element (66) is arranged in a pivotable and/or movable way and can be pivoted or moved into the shifting path or out of the shifting path, respectively.

7. Device according to claim 6, wherein the deflection element (66) can be pivoted and/or moved into a blocking position and into a passing position and is configured and/or arranged in such a way that in its blocking position it blocks the shifting path for shifting the cassette (32) located in the take-up slot (30) and in its passing position releases this shifting path.

8. Device according to claim 7, wherein the deflection element (66) is configured and arranged in such a way that, when shifting the cassette (32) located in the take-up slot (30), the deflection element (66) is brought from its blocking position into its passing position as a result of a contact between the cassette (32) and the deflection element (66).

9. Device according to claim 7, wherein a control unit (24) is provided for controlling the pivoting or movement of the deflection element (66) into its blocking position and its passing position and the control unit (24) is configured in such a way that the pivoting or movement of the deflection element (66) from its blocking position into its passing position is controlled as a function of reaching a predetermined position of the cassette (32) located in the take-up slot (30) during the shifting thereof.

10. Device according to any of the preceding claims, wherein the shifting device (50) comprises a horizontally movable conveyor belt (52), at which two drivers (58, 60) are provided for carrying away the cassette (32) taken up from the take-up slot (30), which along the length of the conveyor belt (52) are spaced apart by a distance which is greater than the greatest width of the horizontal widths of the multiple cassettes (14, 28, 32).

11. Device according to claim 10, wherein at least one of both drivers (84) respectively comprises two single subdrivers (86, 88) which are arranged directly adjacent to one another at the conveyor belt (52) along the length of the conveyor belt (52).

12. Device according to any of the preceding claims, wherein a registration device (90) for registering a cassette (32) which is rearmost in the stacking direction (S) and which was not properly taken up from the take-up slot (30) and a control unit (24) for controlling the horizontal movement of the conveyor belt (52) are provided, wherein the control unit (24) is configured in such a way that it causes a consecutive movement of the conveyor belt (52) and, as a consequence thereof, a horizontal shifting of the cassette (92) which is rearmost in the stacking direction (S) in two opposite transport directions (A, B), provided that the registration device (90) registers an improper take-up of the rearmost cassette (92) in the stacking direction (S) from the take-up slot (30).

13. Device according to any of the preceding claims, wherein it comprises an output unit (16) for unloading the multiple cassettes (14, 28, 32) which are stackable in the output unit (16) one after another, in particular in an opposite stacking direction (T'), and wherein the output unit (16) comprises two pushers (74, 76) which are horizontally spaced apart and which can be moved in the stacking direction (S).

14. Device according to claim 13, wherein a control unit (24) for controlling the pushers (74, 76) is provided and the control unit (24) is configured in such a way that it controls a sequential movement of the two pushers (74, 76), during which, when shifting the cassette (32) located in the take-up slot (30) into the output unit (16), it first moves the pusher (74) which is located more closely to the feeding unit (12) and which was moved in the stacking direction (S) and subsequently moves in the opposite stacking direction (T) the pusher (76) which is located more distantly from the feeding unit (12) and which was moved in the stacking direction (S).

## Revendications

1. Dispositif (10) de lecture d'informations radiographiques stockées dans des plaques luminescentes à mémoire, comprenant
- une unité d'insertion (12) dans laquelle peuvent être empilées l'une après l'autre, dans un sens d'empilage (S), plusieurs cassettes (14, 28, 32) comprenant respectivement une plaque luminescente à mémoire à être lue,
- une fente réceptrice oblongue (30) servant à recevoir une des cassettes (32), ladite fente réceptrice (30) étant adjacente à l'unité d'insertion (12) et comprenant une ouverture d'insertion oblongue (40) à travers laquelle la plaque luminescente à mémoire située dans la cassette (32) reprise de la fente réceptrice (30) peut être transportée à l'intérieur du dispositif (10),
- un dispositif de déplacement (50) servant à déplacer horizontalement la cassette (32) située dans la fente réceptrice (30) le long d'une trajectoire de déplacement et
- un élément déflecteur (64, 66) servant à dévier une cassette suivante (28) située dans l'unité d'insertion (12) et faisant saillie au moins partiellement dans la trajectoire de déplacement, **caractérisé en ce que** l'élément déflecteur (64, 66) est disposé et/ou configuré de façon à ce que, lors d'un déplacement horizontal de la cassette (32) située dans ladite fente réceptrice (30) le long de la trajectoire de déplacement, une force soit exercée sur la cassette suivante (28) dans le sens d'empilage (S) par suite d'un contact entre la cassette (32) située dans la fente réceptrice (30) et la cassette suivante (28) faisant saillie au moins partiellement dans la trajectoire de déplacement, la cassette suivante (28) étant ainsi poussée contre l'élément déflecteur et étant déplacée de cette façon hors de la trajectoire de déplacement.

2. Dispositif selon la revendication 1, **caractérisé en ce que** l'élément déflecteur (64, 66) est disposé dans une zone de transition entre l'unité d'insertion (12) et la fente réceptrice (30).

3. Dispositif selon la revendication 1 ou 2, **caractérisé en ce que** l'élément déflecteur (64, 66) comprend une zone de guidage biseautée (68, 70) servant à guider la cassette suivante (28) située dans l'unité d'insertion (12) hors de la trajectoire de déplacement.

4. Dispositif selon l'une quelconque des revendications précédentes, **caractérisé en ce que** l'élément déflecteur (64, 66) est disposé dans une zone de bord de la fente réceptrice (30).

5. Dispositif selon l'une quelconque des revendications précédentes, **caractérisé en ce qu'**au-dessus de l'élément déflecteur (64, 66) il est prévu un élément de positionnement (72) servant à positionner la cassette (32) reprise de la fente réceptrice (30) et que l'élément de positionnement (72) est disposé et/ou configuré de façon à ce que la cassette suivante (28) faisant saillie dans la trajectoire de déplacement ne puisse basculer par-dessus l'élément de positionnement (72).

6. Dispositif selon l'une quelconque des revendications précédentes, **caractérisé en ce que** l'élément déflecteur (66) est disposé de façon pivotable et/ou déplaçable et peut respectivement être pivoté ou déplacé dans la trajectoire de déplacement ou hors de la trajectoire de déplacement.

7. Dispositif selon la revendication 6, **caractérisé en ce que** l'élément déflecteur (66) peut être pivoté et/ou déplacé jusque dans une position de blocage et dans une position de passage et est configuré et/ou disposé de façon à bloquer, dans sa position de blocage, la trajectoire de déplacement servant à déplacer la cassette (32) située dans la fente réceptrice (30) et, dans sa position de passage, à dégager ladite trajectoire de déplacement.

8. Dispositif selon la revendication 7, **caractérisé en ce que** l'élément déflecteur (66) est configuré et disposé de façon à ce que, lors du déplacement de la cassette (32) située dans la fente réceptrice (30), un contact entre la cassette (32) et l'élément déflecteur (66) provoque le déplacement de l'élément déflecteur (66) de sa position de blocage à sa position de passage.

9. Dispositif selon la revendication 7, **caractérisé en ce qu'**il est prévu une unité de contrôle (24) servant à contrôler le pivotement ou le déplacement de l'élément déflecteur (66) jusque dans sa position de blocage et sa position de passage et que l'unité de contrôle (24) est configurée de façon à ce que le pivotement ou le déplacement de l'élément déflecteur (66) de sa position de blocage à sa position de passage soit contrôlé en fonction de l'atteinte d'une position prédéterminée de la cassette (32) située dans la fente réceptrice (30) lors du déplacement de celle-ci.

10. Dispositif selon l'une quelconque des revendications précédentes, **caractérisé en ce que** le dispositif de déplacement (50) comprend une bande transporteuse horizontalement déplaçable (52) à laquelle sont prévus deux entraîneurs (58, 60) servant à entraîner la cassette (32) reprise de la fente réceptrice (30), lesdits deux entraîneurs (58, 60) étant espacés l'un de l'autre le long de la longueur de la bande transporteuse (52) d'une distance supérieure à la plus grande largeur des largeurs horizontales des plusieurs cassettes (14, 28, 32).

11. Dispositif selon la revendication 10, **caractérisé en ce qu'**au moins un des deux entraîneurs (84) comprend respectivement deux sous-entraîneurs séparés (86, 88) disposés directement adjacents l'un à l'autre à la bande transporteuse (52) le long de la longueur de la bande transporteuse (52).

12. Dispositif selon l'une quelconque des revendications précédentes, **caractérisé en ce qu'**il est prévu un dispositif d'enregistrement de cassette (90) servant à enregistrer une dernière cassette (32) dans le sens d'empilage (S) qui n'avait pas été correctement reprise de la fente réceptrice (30) et une unité de contrôle (24) servant à contrôler le déplacement horizontal de la bande transporteuse (52), ladite unité de contrôle (24) étant configurée de façon à provoquer un déplacement consécutif de la bande transporteuse (52) et ainsi un déplacement horizontal de la dernière cassette (92) dans le sens d'empilage (S) dans deux sens de transport opposés (A, B), à condition que le dispositif d'enregistrement de cassette (90) enregistre une reprise incorrecte de la dernière cassette (92) dans le sens d'empilage (S) de la fente réceptrice (30).

13. Dispositif selon l'une quelconque des revendications précédentes, **caractérisé en ce qu'**il comprend une unité de sortie (16) servant à sortir les plusieurs cassettes (14, 28, 32) empilables l'une après l'autre dans l'unité de sortie (16), en particulier dans un sens d'empilage opposé (T), et que l'unité de sortie (16) comprend deux poussoirs (74, 76) espacés horizontalement entre eux et pouvant être déplacés dans le sens d'empilage (S).

14. Dispositif selon la revendication 13, **caractérisé en ce qu'**il est prévu une unité de contrôle (24) servant à contrôler les poussoirs (74, 76) et que l'unité de contrôle (24) est configurée de façon à contrôler un déplacement séquentiel des deux poussoirs (74, 76) lors duquel, au moment du déplacement de la cassette (32) située dans fente réceptrice (30) dans l'unité de sortie (16), elle déplace d'abord le poussoir (74) situé plus proche de l'unité d'insertion (12) et déplacé dans le sens d'empilage (S) et déplace ensuite dans le sens d'empilage opposé (T) le poussoir (76) situé plus éloigné de l'unité d'insertion (12) et déplacé dans le sens d'empilage (S).
